# EUROPÄISCHE PATENTANMELDUNG

(11) **EP 1 650 650 A1**
(43) Veröffentlichungstag der Anmeldung: **26.04.2006**
(21) Anmeldenummer: 05021166.3
(22) Anmeldetag: 28.09.2005
(51) Int. Cl.: G06F 9/40

(54) **Übergabe von Variablen**

(30) Priorität: 25.10.2004 DE 102004051824
(71) Anmelder: Giesecke & Devrient GmbH, 81677 München (DE)
(72) Erfinder: Richter, Raimund, 81377 München (DE)

(57) **Zusammenfassung**

Die Erfindung schafft ein Verfahren zur Übergabe von Variablen zwischen den Rahmen aufeinanderfolgender Methoden, bei einer Stapel-basierten, mit Rahmen arbeitenden Programmiersprache, bei der für die Ausführung von Programmcode in der Programmiersprache zumindest ein Stapel bereitgestellt wird, und bei der die Ausführung des Programmcodes die aufeinanderfolgende Ausführung von Methoden vorsieht, wobei für jede gerade ausgeführte Methode auf dem Stapel ein aktiver Rahmen betrieben wird. Gemäß der Erfindung erfolgt die Übergabe von Variablen zwischen den Rahmen aufeinanderfolgender Methoden dadurch, dass die Rahmen der aufeinander folgenden Methoden so eingerichtet werden, dass die Rahmen überlappen.

## Beschreibung

Die Erfindung betrifft, bei einer Stapel-basierten, mit Rahmen arbeitenden Programmiersprache, bei der für die Ausführung von Programmcode in der Programmiersprache zumindest ein Stapel bereitgestellt wird, und bei der die Ausführung des Programmcodes die aufeinanderfolgende Ausführung von Methoden vorsieht, wobei für jede gerade ausgeführte Methode auf dem Stapel ein aktiver Rahmen betrieben wird, ein Verfahren zur Übergabe von Variablen zwischen den Rahmen aufeinanderfolgender Methoden.

Ein Beispiel für eine Programmiersprache wie die eingangs bezeichnete ist Java. Grundlegende Konzepte von Java sind beispielsweise in "Java™, die Spezifikation der virtuellen Maschine" von Tim Lindholm & Frank Yellin, 1997 Addison Wesley Longman Verlag, 1. Auflage 1997 (im Folgenden "Lindholm & Yellin" genannt) vorgestellt.

Java ist eine Interpreter-basierte Programmiersprache, bei welcher der Programmcode in einem Datenformat für einen Interpreter bereitgestellt wird. Der Interpreter bildet einen Teil der virtuellen (Java-)Maschine.

Der virtuellen Maschine ist ein Java-Stapel (*java stack*) zugewiesen, der z.B. zum Abspeichern unterschiedlicher Variablen und Teilergebnisse verwendet wird. Wahlweise unterstützt die virtuelle Maschine mehrere Threads (z.B. für mehrere voneinander unabhängige Programme oder Teilprogramme) zugleich und verfügt dann für jeden Thread über einen eigenen Java-Stapel. Im Zusammenhang mit der Erfindung können die Java-Stapel für unterschiedliche Threads als voneinander unabhängige Stapel im Sinn der Erfindung betrachtet werden.

Java sieht Methoden vor, durch die Programmcode von Funktionalitäten verwirklicht ist. Der Programmcode der Methoden ist durch den Interpreter ausführbar. Methoden lassen sich aufrufen (*invoke*)*,* unterbrechen und wieder fortsetzen, sowie beenden (*terminate*)*.*

Java ist eine mit Rahmen (*frames*) arbeitende Programmiersprache. Ein Rahmen oder gleichbedeutend Stapel-Rahmen (*stack frame*) ist eine auf dem Java-Stapel angelegte Ausführungsumgebung für eine Methode. Jede Methode hat ihren eigenen Rahmen.

Bei jedem Aufruf einer Methode (*method invocation*) wird ein Rahmen erzeugt, in dem die Methode ausgeführt wird. Wenn die Methode beendet wird (*method termination*)*,* wird der Rahmen zu der Methode wieder zerstört. Wird eine Methode lediglich unterbrochen, wird der Rahmen der Methode vorübergehend deaktiviert. Wird eine unterbrochene Methode später fortgesetzt, wird der deaktivierte Rahmen wieder aktiviert. Eine Methode, die in diesem Fall als aufrufende Methode (*calling method*) bezeichnet wird, wird beispielsweise dann vorübergehend unterbrochen, wenn aus ihr heraus eine andere Methode, in diesem Fall aufgerufene Methode (*invoked method*) genannt, aufgerufen wird. In diesem Fall wird der zuerst aktive Rahmen der aufrufenden Methode (*calling method*) deaktiviert sobald die aufgerufene Methode (*invoked method*) aufgerufen ist. Der Rahmen der aufgerufenen Methode (*invoked method*) wird dann erzeugt. Sobald die aufgerufene Methode (*invoked method*) beendet ist, wird ihr Rahmen zerstört und der Rahmen der zuvor unterbrochenen aufrufenden Methode (*calling method*) wieder aktiviert.

Jeder auf dem Java-Stapel angelegte Rahmen zu einer Methode hält für die Methode insbesondere einen Operandenstapel (*operands stack*), Speicherbereiche für Rahmen-Zustandsinformationen (*stack frame information* oder gleichbedeutend *frame state information*) und Speicherbereiche für lokale Variablen bereit. Die Rahmen-Zustandsinformationen enthalten Verwaltungsdaten zu dem Rahmen, zu dem sie gehören.

Jeder Methode können wahlweise ein oder mehrere Variablen zugeordnet sein. Für eine aufgerufene Java-Methode in einem aktiven Rahmen gibt es als Variablen insbesondere Methodenparameter (*method parameters*)*.*

Werden mehrere Methoden nacheinander ausgeführt, müssen in der Regel Methodenparameter von einer Methode an die nächste übergeben werden. Die Übergabe von Methodenparametem wird zwischen den aufeinanderfolgenden Rahmen der aufeinanderfolgenden Methoden durchgeführt. Technisch gesehen werden dabei die Methodenparameter vom Operandenstapel des zuerst aktiven Rahmens in die lokalen Variablen des Rahmens, der als nächstes aktiv wird, übertragen.

Beim Aufruf einer Methode werden also beispielsweise die benötigten Methodenparameter in die lokalen Variablen des Rahmens, der für die aufgerufene Methode erzeugt wird, eingetragen. Im Fall, dass die aufgerufene Methode (*invoked method*) aus einer aufrufenden Methode (*calling method*) heraus aufgerufen wird, werden die Methodenparameter von der aufrufenden Methode (*calling method*) an die aufgerufene Methode (*invoked method*) übergeben. Dabei sind die zu übergebenden Methodenparameter zuerst auf dem Operandenstapel der aufrufenden Methode (*calling method*) abgelegt. Sobald für die aufgerufene Methode (*invoked method*) ein Rahmen erzeugt ist, werden die Methodenparameter vom "alten" Operandenstapel der aufrufenden Methode (*calling method*) in die lokalen Variablen der aufgerufenen Methode (*invoked method*) übertragen.

Insgesamt ist es also bei der herkömmlichen Übergabe von Methodenparametern zwischen aufeinanderfolgenden Methoden, beispielsweise beim Aufruf einer Methode (*method invocation*)*,* erforderlich, die Methodenparameter zu kopieren. Für das Kopieren sind Zeit und Speicher erforderlich.

Der Erfindung liegt die Aufgabe zu Grunde, bei einer Programmiersprache wie der eingangs genannten ein effizientes Verfahren zur Übergabe von Variablen zwischen aufeinanderfolgenden Rahmen zu schaffen.

Die Aufgabe wird durch ein Verfahren nach Anspruch 1 gelöst. Vorteilhafte Ausgestaltungen der Erfindung sind in den abhängigen Ansprüchen angegeben.

Bei dem Verfahren nach Anspruch 1 erfolgt die Übergabe von Variablen zwischen den Rahmen aufeinanderfolgender Methoden dadurch, dass die Rahmen der aufeinander folgenden Methoden so eingerichtet werden, dass die Rahmen überlappen. Konkret wird bei dem Verfahren zuerst ein erster Rahmen einer ersten Methode aktiv betrieben. Nachfolgend wird ein zweiter Rahmen einer zweiten Methode aktiv betrieben. Dabei werden die zu übergebenden Variablen vom ersten Rahmen an den zweiten Rahmen übergeben. Gemäß der Erfindung erfolgt die Übergabe von Variablen vom ersten Rahmen an den zweiten Rahmen dadurch, dass der erste Rahmen und der zweite Rahmen so eingerichtet werden, dass die Rahmen überlappen.

Die Rahmen überlappen im Speicherbereich. Bei Java-Methoden auf dem Java-Stapel haben also beispielsweise die Rahmen der aufeinanderfolgenden Methoden (d.h. der ersten und der zweiten Methode) auf dem Java-Stapel einen Überlapp. Der Überlapp ist so gestaltet, dass die Variablen, die während des aktiven Bestehens des ersten Rahmens der ersten Methode für die erste Methode bereit standen, nachfolgend, wenn der erste Rahmen deaktiviert ist (z.B. bei vorübergehender Methodenunterbrechung) oder zerstört ist (z.B. bei Methodenbeendigung), und der zur nachfolgenden zweiten Methode gehörige zweite Rahmen aktiviert ist, automatisch für die zweite Methode bereit stehen. Ein Kopieren der Variablen ist nicht erforderlich. Hierdurch ist das erfindungsgemäße Verfahren zur Übergabe von Variablen besonders effizient.

Folglich ist gemäß Anspruch 1 ein besonders effizientes Verfahren zur Übergabe von Variablen zwischen aufeinanderfolgenden Rahmen geschaffen.

Bei einer bevorzugten Ausführungsform der Erfindung ist als Übergabe von Variablen eine Übergabe von Variablen von einer aufrufenden (*calling*) Methode an eine aufgerufene (*invoked*) Methode, die durch die aufrufende Methode aufgerufen wird, vorgesehen.

Gemäß einer bevorzugten Ausführungsform der Erfindung hat der erste Rahmen einen Speicherbereich für einen Operandenstapel, auf dem die Variablen zur Übergabe an den zweiten Rahmen bereitgestellt werden. Der zweite Rahmen hat vorzugsweise einen Speicherbereich für lokale Variablen, der zumindest teilweise zur Entgegennahme von übergebenen Variablen bereitgestellt ist. Vorzugsweise erfolgt die Übergabe von Variablen durch Überlapp des ersten Rahmens und des zweiten Rahmens dadurch, dass der Speicherbereich des Operandenstapels des ersten Rahmens, auf dem die Variablen zur Übergabe bereitgestellt sind, als zumindest ein Teil des Speicherbereichs für lokale Variablen des zweiten Rahmens deklariert wird. Vorzugsweise ist dieser Teil ein Anfangsbereich des Speicherbereichs für lokale Variablen. Zumindest ein Teil des Speicherbereichs, den eine im ersten Rahmen aktive erste Methode als Operandenstapel zur Verfügung hatte, steht also nachfolgend einer zweiten Methode, die im zweiten Rahmen aktiv ist, als zumindest ein Teil des Speicherbereichs für lokale Variablen zur Verfügung. Ein weiterer Bereich des Speicherbereichs für lokale Variablen wird in der Regel für eigene lokale Variablen verwendet, die in der zweiten Methode selbst deklariert werden.

Gemäß einer bevorzugten Ausführungsform sind die Variablen Methodenparameter, oder die Variablen weisen Methodenparameter auf.

Wahlweise ist die Programmiersprache bei dem Verfahren Java. Entsprechend ist der Stapel dann ein Java-Stapel, die Methode eine Methode im Sinn der Java oder Java Card Spezifikation, und vorzugsweise sind die Variableninsbesondere alle oder zum Teil - Methodenparameter im Sinn von Java.

Gemäß der Erfindung wird auch ein Datenträger mit einem elektronischen Speicher und einem darin implementierten Verfahren gemäß der Erfindung angegeben.

Ein Datenträger im Sinn der Erfindung ist ein Rechnersystem, bei dem die Ressourcen, d.h. Speicherressourcen und/oder Rechenkapazität (Rechenleistung) begrenzt sind, z.B. eine Chipkarte (Smart Card, Mikroprozessor-Chipkarte). Der Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der Datenträger kann weiter eine oder mehrere beliebige Schnittstellen für kontaktlose und/oder kontaktbehaftete Kommunikation mit einem Lesegerät oder Datenverarbeitungssystem (z.B. Personal Computer, Workstation, Server) haben.

Der Datenträger hat einen elektronischen Speicher, der in der Regel aufweist: einen nichtflüchtigen Systemspeicher ROM, einen nichtflüchtigen Anwendungsspeicher EEPROM und einen flüchtigen Arbeitsspeicher RAM. Im ROM sind im Wesentlichen das Betriebssystem und Systemfunktionen abgespeichert. Im EEPROM sind im Wesentlichen Anwendungen (gleichbedeutend: Applikationen) abgespeichert. Wahlweise sind einige der Speicher durch Flash-Speicher bzw. FRAM oder sonstige geeignete Speicher ersetzt.

Im folgenden wird die Erfindung anhand von Ausführungsbeispielen und unter Bezugnahme auf die Zeichnung näher erläutert, in der zeigt:

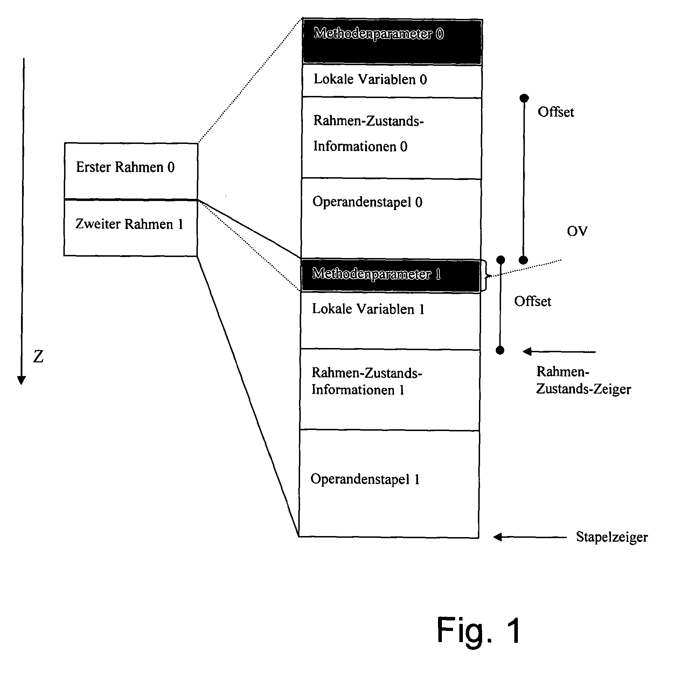

- Fig. 1: eine schematische Darstellung eines Java-Stapels mit zwei Rahmen von zwei aufeinanderfolgenden Methoden, nämlich einer aufrufenden Methode und einer aufgerufenen Methode.

Fig. 1 zeigt eine schematische Darstellung eines Java-Stapels. Der Java-Stapel ist in Speicherbereiche mit unterschiedlichen Speicheradressen eingeteilt. Die Speicheradressen werden in Richtung des Pfeils Z von oben nach unten größer. Auf dem Java-Stapel sind ein erster Rahmen Stack Frame 0 und ein zweiter Rahmen Stack Frame 1 angelegt, wie durch die beiden Beschriftungskästen "Stack Frame 0" und "Stack Frame 1" angedeutet ist. Der erste Rahmen Stack Frame 0 gehört zu einer aufrufenden Methode (*calling method*) und weist einen ersten Speicherbereich für lokale Variablen "Local Variables 0", einen ersten Speicherbereich für Rahmen-Zustandsinformationen "Stack Frame Information 0" und einen ersten Operandenstapel "Operands Stack 0" auf. Der zweite Rahmen Stack Frame 1 gehört zu einer aufgerufenen Methode (*invoked method*)*,* die aus der aufrufenden Methode (*calling method*) heraus aufgerufen wird, und weist einen zweiten Speicherbereich für lokale Variablen "Local Variables 1", einen zweiten Speicherbereich für Rahmen-Zustandsinformationen "Stack Frame Information 1" und einen zweiten Operandenstapel "Operands Stack 1" auf. Der erste Rahmen Stack Frame 0 ist aktiv solange die aufrufende Methode (*calling method*) aktiv ist, d.h. gerade ausgeführt wird. Der zweite Rahmen Stack Frame 1 ist aktiv solange die aufgerufene Methode (*invoked method*) aktiv ist, d.h. gerade ausgeführt wird.

Der grau unterlegte und mit "Method Parameters 1" bezeichnete Speicherbereich auf dem Stapel gibt den Überlapp OV der beiden Rahmen Stack Frame 0 und Stack Frame 1 an. Der Überlapp-Speicherbereich OV ist identisch sowohl mit den obersten Einträgen auf dem Operandenstapel "Operands Stack 0" des ersten Rahmens Stack Frame 0 als auch mit dem Anfangsbereich der lokalen Variablen "Local Variables 1" des zweiten Rahmens Stack Frame 1.

Zu jedem der beiden Rahmen (zu aufrufender und aufgerufener Methode) existieren Rahmen-Zustandsinformationen.

Die Struktur der Rahmen-Zustandsinformationen zum Rahmen der aufgerufenen Methode kann beispielsweise gestaltet sein wie durch den folgenden Pseudo-Code angegeben ist. Die Rahmen-Zustandsinformationen zum Rahmen der aufrufenden Methode sind im Wesentlichen analog strukturiert.

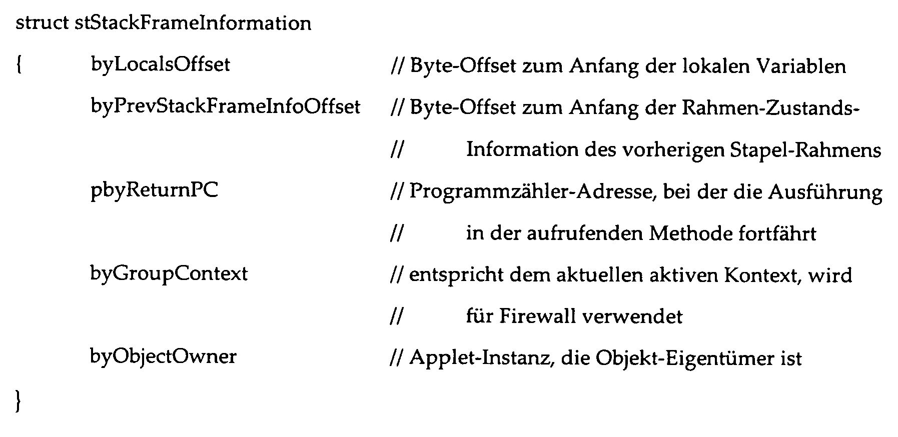

Der Parameter byLocalsOffset gibt den in Einheiten von Bytes gemessenen Offset vom Anfang der Rahmen-Zustandsinformationen des aufgerufenen Rahmens zum Anfang der lokalen Variablen des aufgerufenen Rahmens an. Der Anfang der lokalen Variablen ist zugleich der Anfang des Rahmens insgesamt. Der Parameter byPrevStackFrameInfoOffset gibt den in Einheiten von Bytes gemessenen Offset vom Anfang der lokalen Variablen des aufgerufenen Rahmens zum Anfang der Rahmen-Zustandsinformationen des aufrufenden (d.h. vorangehenden) Rahmens an. Der Parameter pbyReturnPC bezeichnet einen Zeiger (Pointer) auf die Adresse des Programmzählers, bei der die Programmausführung in der aufrufenden (*calling*) Methode fortfährt, nachdem die aufgerufene (*invoked*) Methode beendet ist. Der Parameter byGroupContext gibt den aktuell aktiven Kontext der aufgerufenen (*invoked*) Methode an. Der Parameter byObjectOwner gibt die Applet-Instanz an, die Objekt-Eigentümer der aufgerufenen Methode ist.

Das erfindungsgemäße Verfahren ist bei dem Java-Stapel aus Fig. 1 folgendermaßen ausgeführt. Zunächst ist die aufrufende Methode (*calling method*) aktiv. Die Methodenparameter "Method Parameters 0", die von der aufrufenden Methode benötigt werden, sind zunächst in den lokalen Variablen bereit gestellt und werden auf dem Operandenstapel "Operands Stack 0" durch die aufrufende Methode (*calling method*) bearbeitet.

Die aufrufende Methode (*calling method*) führt nun einen Methodenaufruf aus, mit dem sie die aufgerufene Methode (*invoked method*) aufruft.

Durch den Methodenaufruf wird der erste "alte" Rahmen der aufrufenden Methode "Stack Frame 0" inaktiv. Methodenparameter, die an die aufgerufene Methode übergeben werden sollen, werden in den obersten Adressen des Operandenstapels des alten Rahmens "Stack Frame 0" belassen.

Durch den Methodenaufruf wird weiter ein zweiter Rahmen "Stack Frame 1" für die aufgerufene Methode erzeugt und die aufgerufene Methode aktiviert. Die Adresse des zweiten Rahmens "Stack Frame 1" auf dem Java-Stapel wird so gesetzt, dass der Anfangsbereich der lokalen Variablen "Local Variables 1" des zweiten Rahmens "Stack Frame 1" der aufgerufenen Methode diejenigen Adressen auf dem Operandenstapel des ersten Rahmens "Frame 0" umfasst, in denen die zu übergebenden Methodenparameter abgelegt sind. Hierdurch sind ohne weiteres Zutun die zu übergebenden Methodenparameter im Anfangsbereich der lokalen Variablen "Local Variables 1" des zweiten Rahmens "Stack Frame 1" für die aufgerufene Methode bereit gestellt. Auf die übergebenen Methodenparameter können in den lokalen Variablen noch durch die aufgerufene Methode selbst deklarierte lokale Variablen folgen.

Das wunschgemäße Setzen der Adresse des zweiten Rahmens "Stack Frame 1" wird erzielt, indem der Anfang der Methodenparameter auf dem Operandenstapel "Operands Stack 0" ermittelt wird und als Anfang der lokalen Variablen "Local Variables 1" der aufgerufenen Methode festgesetzt wird.

In die Rahmen-Zustandsinformationen "Stack Frame Information 1" des zweiten Rahmens "Stack Frame 1" werden die beiden Parameter byLocalsOffset und byPrevStackFrameInfoOffset eingetragen. Der Parameter byLocalsOffset gibt den Offset vom Anfang der Rahmen-Zustandsinformationen "Stack Frame Information 1" des zweiten Rahmens "Stack Frame 1" zum Anfang der lokalen Variablen "Local Variables 1" desselben Rahmens "Stack Frame 1" an. Der Anfang der Methodenparameter auf dem Operandenstapel "Operands Stack 0" des ersten Rahmens "Stack Frame 0" lässt sich aus dem aktuellen Stapelzeiger g_pwSP und der Anzahl der Methodenparameter der aufgerufenen Methode, die in deren Methodenheader angegeben ist, ermitteln. Der nach dem erfolgreichen Aufruf der aufgerufenen Methode (*invoked method*) neue Stapelzeiger g_pwSP lässt sich wiederum aus seinem alten Wert zuzüglich der Summe der in der aufgerufenen Methode selbst deklarierten lokalen Variablen, deren Anzahl ebenfalls im Methodenheader der aufgerufenen Methode angegeben ist, und der Größe der Datenstruktur für die Rahmen-Zustandsinformationen "Stack Frame Information 1" berechnen. Die Größe des Bereichs der lokalen Variablen "Local Variables 1" der aufgerufenen Methode berechnet sich aus der Summe der Anzahl der Methodenparameter, die wie gesagt im Methodenheader angegeben ist, und der Anzahl der in der aufgerufenen Methode selbst deklarierten lokalen Variablen.

Der so ermittelte Anfang der Methodenparameter auf dem Operandenstapel "Operands Stack 0" wird als Anfang der lokalen Variablen "Local Variables 1" der aufgerufenen Methode festgesetzt.

## Patentansprüche

1. Verfahren zur Übergabe von Variablen zwischen den Rahmen aufeinanderfolgender Methoden, bei einer Stapel-basierten, mit Rahmen arbeitenden Programmiersprache, bei der für die Ausführung von Programmcode in der Programmiersprache zumindest ein Stapel bereitgestellt wird, und bei der die Ausführung des Programmcodes die aufeinanderfolgende Ausführung von Methoden vorsieht, wobei für jede gerade ausgeführte Methode auf dem Stapel ein aktiver Rahmen betrieben wird, wobei bei dem Verfahren
- zuerst ein erster Rahmen einer ersten Methode aktiv betrieben wird,
- nachfolgend ein zweiter Rahmen einer zweiten Methode aktiv betrieben wird,
- wobei ein oder mehrere Variablen vom ersten Rahmen an den zweiten Rahmen übergeben werden,
wobei die Übergabe von Variablen vom ersten Rahmen an den zweiten Rahmen **dadurch** erfolgt, dass der erste Rahmen und der zweite Rahmen so eingerichtet werden, dass die Rahmen überlappen.

2. Verfahren nach Anspruch 1, wobei als Übergabe von Variablen eine Übergabe von Variablen von einer aufrufenden (*calling*) Methode an eine aufgerufene (*invoked*) Methode, die durch die aufrufende Methode aufgerufen wird, vorgesehen ist.

3. Verfahren nach Anspruch 1 oder 2, wobei
- der erste Rahmen einen Speicherbereich für einen Operandenstapel hat, auf dem die Variablen zur Übergabe an den zweiten Rahmen bereitgestellt werden,
- der zweite Rahmen einen Speicherbereich für lokale Variablen hat, der zur Entgegennahme von übergebenen Variablen bereitgestellt ist, und
- die Übergabe von Variablen durch Überlapp des ersten Rahmens und des zweiten Rahmens **dadurch** erfolgt, dass der Speicherbereich des Operandenstapels des ersten Rahmens, auf dem die Variablen zur Übergabe bereitgestellt sind, als zumindest ein Teil des Speicherbereichs für lokale Variablen des zweiten Rahmens deklariert wird.

4. Verfahren nach einem der Ansprüche 1 bis 3, wobei die Variablen Methodenparameter sind oder aufweisen.

5. Verfahren nach einem der Ansprüche 1 bis 4, wobei die Programmiersprache Java ist.

6. Datenträger mit einem elektronischen Datenspeicher und mit einem darin implementierten Verfahren nach einem der Ansprüche 1 bis 5.

7. Computerprogrammprodukt mit einem darin implementierten Verfahren nach einem der Ansprüche 1 bis 5.
